# DEMANDE DE BREVET EUROPEEN

(11) **EP 1 503 038 A1**
(43) Date de publication de la demande: **02.02.2005**
(21) Numéro de dépôt: 04291819.3
(22) Date de dépôt: 16.07.2004
(51) Int. Cl.: F01D 5/18, F01D 5/20

(54) **Circuit de refroidissement pour aube de turbine**

(30) Priorité: 01.08.2003 FR 0309535
(71) Demandeur: SNECMA MOTEURS, 75015 Paris (FR)
(72) Inventeur: Botrel, Erwan, 94140 Alfortville (FR); Eneau, Patrice, 77550 Moissy-Cramayel (FR)
(74) Mandataire: Joly, Jean-Jacques

(57) **Abrégé**

Aube (10) de turbine à gaz d'une turbomachine, comportant, dans sa partie centrale, un premier circuit de refroidissement central (A) comprenant au moins une cavité extrados (30), au moins une cavité intrados (32), au moins une cavité centrale (34) s'étendant entre la cavité extrados (30) et la cavité intrados (32), une première ouverture d'admission d'air à une extrémité radiale inférieure de la cavité extrados, une seconde ouverture d'admission d'air à une extrémité radiale inférieure de la cavité intrados (32), au moins un premier passage faisant communiquer une extrémité radiale supérieure de la cavité extrados (30) à une extrémité radiale supérieure de la cavité centrale (34), au moins un second passage faisant communiquer une extrémité radiale supérieure de la cavité intrados (32) à l'extrémité radiale supérieure de la cavité centrale (34), et des orifices de sortie (44) s'ouvrant dans la cavité centrale (34) et débouchant sur la face intrados (22) de l'aube.

## Description

### Arrière-plan de l'invention

La présente invention est relative aux aubes d'une turbine à gaz de turbomachine. Plus particulièrement, elle vise des circuits de refroidissement de ces aubes.

Il est connu que les aubes mobiles d'une turbine à gaz de turbomachine, et notamment de la turbine haute-pression, sont soumises aux températures très élevées des gaz de combustion pendant le fonctionnement du moteur. Ces températures atteignent des valeurs largement supérieures à celles que peuvent supporter sans dommages les différentes pièces qui sont en contact avec ces gaz, ce qui a pour conséquence de limiter leur durée de vie.

Il est également connu qu'une élévation de la température des gaz de la turbine haute-pression permet d'améliorer le rendement d'une turbomachine, donc le rapport entre la poussée du moteur et le poids d'un avion propulsé par cette turbomachine. Par conséquent, des efforts sont entrepris afin de réaliser des aubes de turbine qui peuvent résister à des températures de plus en plus élevées.

Afin de résoudre ce problème, il est généralement prévu de munir ces aubes de circuits de refroidissement visant à réduire la température de ces dernières. Grâce à de tels circuits, de l'air de refroidissement, qui est généralement introduit dans l'aube par son pied, traverse celle-ci en suivant un trajet formé par des cavités pratiquées dans l'aube avant d'être éjecté par des orifices s'ouvrant à la surface de l'aube.

Ainsi, le brevet FR 2,765,265 propose un aubage de turbine qui est refroidi par une rampe hélicoïdale, par un système d'impact et par un système à pontets. Bien que le refroidissement semble satisfaisant, de tels circuits sont complexes à réaliser et on constate que les échanges thermiques produits par la circulation de l'air de refroidissement ne sont pas uniformes et engendrent des gradients de température qui pénalisent la durée de vie de l'aube.

### Objet et résumé de l'invention

La présente invention vise donc à pallier de tels inconvénients en proposant une aube de turbine à gaz dont les circuits de refroidissement permettent d'abaisser la température moyenne de l'aube et d'éviter la formation de gradients thermiques afin d'augmenter la durée de vie de l'aube.

A cet effet, il est prévu une aube de turbine à gaz d'une turbomachine, comportant une surface aérodynamique qui s'étend radialement entre un pied d'aube et un sommet d'aube, qui présente un bord d'attaque et un bord de fuite reliés par une face latérale intrados et une face latérale extrados et qui est fermée au niveau du sommet d'aube par une paroi transversale, la surface aérodynamique s'étendant radialement au-delà de la paroi transversale de façon à former une baignoire, caractérisée en ce qu'elle comporte en outre, dans sa partie centrale, un premier circuit de refroidissement central comprenant au moins une cavité extrados s'étendant radialement du côté extrados de l'aube, au moins une cavité intrados s'étendant radialement du côté intrados de l'aube, au moins une cavité centrale s'étendant radialement dans la partie centrale de l'aube entre la cavité extrados et la cavité intrados, une première ouverture d'admission d'air à une extrémité radiale inférieure de la cavité extrados pour alimenter en air de refroidissement la cavité extrados, une seconde ouverture d'admission d'air à une extrémité radiale inférieure de la cavité intrados pour alimenter en air de refroidissement la cavité intrados, au moins un premier passage faisant communiquer une extrémité radiale supérieure de la cavité extrados à une extrémité radiale supérieure de la cavité centrale, au moins un second passage faisant communiquer une extrémité radiale supérieure de la cavité intrados à l'extrémité radiale supérieure de la cavité centrale, et des orifices de sortie s'ouvrant dans la cavité centrale et débouchant sur la face intrados de l'aube.

Un tel premier circuit de refroidissement central de l'aube permet d'abaisser la température moyenne de l'aube tout en diminuant la formation de gradients thermiques afin d'augmenter la durée de vie de l'aube.

De préférence, la paroi transversale de l'aube comporte une pluralité de trous d'émission s'ouvrant dans les cavités intrados, extrados et centrale du premier circuit de refroidissement et débouchant dans la baignoire de l'aube.

De tels trous d'émission permettent ainsi de créer des films d'air dans le fond de la baignoire de l'aube afin de protéger celle-ci contre les gaz chauds.

De façon avantageuse, la cavité intrados et la cavité extrados du premier circuit de refroidissement comportent des pontets s'étendant entre ses parois latérales afin d'accroître les transferts thermiques internes.

De tels pontets permettent également de créer des puits thermiques qui transfèrent les calories de la paroi de la cavité en contact avec les gaz chauds vers la paroi plus froide de la cavité qui est en contact avec la cavité centrale, ce qui limite la création de gradients thermiques dans l'aube.

Toujours de façon avantageuse, la cavité intrados et la cavité extrados du premier circuit de refroidissement sont à rapport de forme élevé de manière à accroître les transferts thermiques internes.

L'aube de turbine comporte avantageusement un deuxième et un troisième circuit de refroidissement qui sont indépendants l'un de l'autre et du premier circuit de refroidissement. Ils permettent d'assurer respectivement un refroidissement du bord de fuite et du bord d'attaque de l'aube.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'une aube de turbine selon l'invention ;
- la figure 2 est une vue en coupe transversale de l'aube de la figure 1 ;
- la figure 3 est une vue selon la coupe III-III de la figure 2 ;
- la figure 4 est une vue selon la coupe IV-IV de la figure 3 ; et
- la figure 5 illustre la circulation de l'air de refroidissement qui est associée aux différents circuits de refroidissement de l'aube de la figure 1.

### Description détaillée d'un mode de réalisation

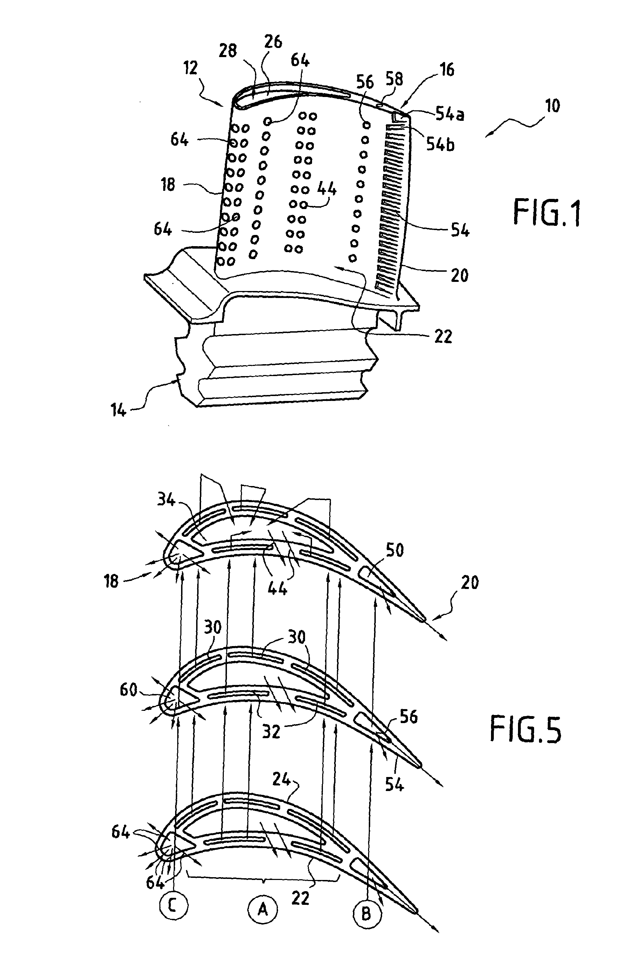

La figure 1 illustre une aube mobile 10, par exemple métallique, d'une turbine haute-pression de turbomachine. Bien entendu, la présente invention peut également s'appliquer à d'autres aubes de la turbomachine, qu'elles soient mobiles ou fixes.

L'aube 10 comporte une surface aérodynamique 12 (ou pale) qui s'étend radialement entre un pied d'aube 14 et un sommet d'aube 16. Le pied d'aube 14 est destiné à être monté sur un disque du rotor de la turbine haute-pression.

La surface aérodynamique 12 présente quatre zones distinctes : un bord d'attaque 18 disposé en regard de l'écoulement des gaz chauds issus de la chambre de combustion de la turbomachine, un bord de fuite 20 opposé au bord d'attaque 18, une face latérale intrados 22 et une face latérale extrados 24, ces faces latérales 22, 24 reliant le bord d'attaque 18 au bord de fuite 20.

Au niveau du sommet d'aube 16, la surface aérodynamique 12 de l'aube est fermée par une paroi transversale 26. Par ailleurs, la surface aérodynamique 12 s'étend radialement légèrement au-delà de cette paroi transversale 26 de façon à former une cuvette 28, dénommée ci-après baignoire de l'aube. Cette baignoire 28 possède donc un fond formé par la paroi transversale 26, un bord formé par la surface aérodynamique 12 et elle est ouverte vers le sommet d'aube 16.

Selon l'invention, l'aube 10 ainsi formée présente un premier circuit central A destiné au refroidissement de l'aube.

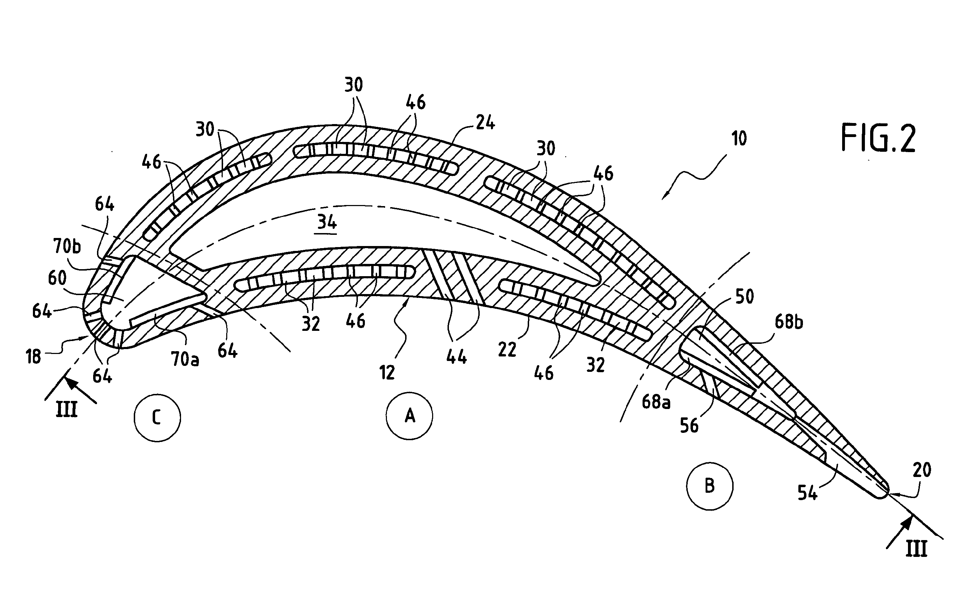

Comme illustré sur la figure 2, le premier circuit de refroidissement A comporte notamment au moins une cavité extrados 30 s'étendant radialement du côté extrados 24 de l'aube, au moins une cavité intrados 32 s'étendant radialement du côté intrados 22 de l'aube et au moins une cavité centrale 34 s'étendant radialement dans la partie centrale de l'aube, entre la cavité extrados 30 et la cavité intrados 32.

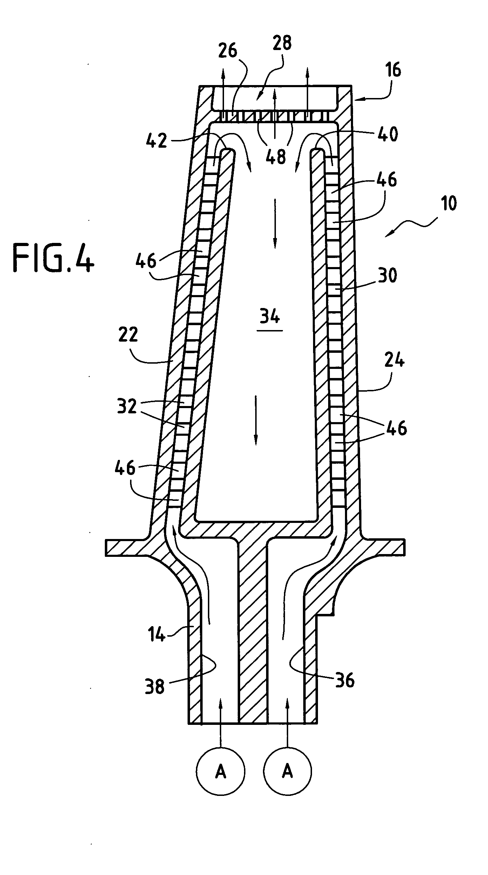

Comme le montre la figure 4, les cavités extrados 30 et intrados 32 s'étendent radialement depuis la paroi transversale 26 formant le fond de la baignoire 28 jusqu'au pied d'aube 14. La cavité centrale 34 s'étend également depuis la paroi transversale 26 mais seulement partiellement sur la hauteur de l'aube. La cavité centrale 34 est par ailleurs la cavité ayant la plus grande dimension dans le sens bord d'attaque/bord de fuite.

Une première ouverture d'admission d'air 36 est prévue à une extrémité radiale inférieure de chaque cavité extrados 30 (c'est à dire au niveau du pied d'aube 14) pour alimenter en air de refroidissement la cavité extrados 30. De même, une seconde ouverture d'admission d'air 38 est prévue à une extrémité radiale inférieure de chaque cavité intrados 32 pour alimenter en air de refroidissement la cavité intrados 32.

Au moins un premier passage 40 permet de faire communiquer l'extrémité radiale supérieure de la cavité extrados 30 (c'est à dire au niveau du sommet d'aube 16) à une extrémité radiale supérieure de la cavité centrale 34. De même, au moins un second passage 42 fait communiquer une extrémité radiale supérieure de la cavité intrados 32 à l'extrémité radiale supérieure de la cavité centrale 34.

Ces premier et second passages 40, 42 permettent ainsi de former une cavité s'étendant entre les faces latérales intrados 22 et extrados 24 et aménagée sous la baignoire 28 de l'aube.

Enfin, le premier circuit de refroidissement A comporte des orifices de sortie 44 s'ouvrant dans la cavité centrale 34 et débouchant sur la face intrados 22 de l'aube. Dans le plan de coupe transversale de la figure 2, ces orifices de sortie 44 sont au nombre de deux.

Selon une caractéristique avantageuse de l'invention, les cavités extrados 30 et intrados 32 du premier circuit de refroidissement A sont à rapport de forme élevé de manière à accroître les transferts thermiques internes. Une cavité de refroidissement est considérée comme ayant un rapport de forme élevé lorsque, en coupe transversale, elle présente une dimension (longueur) au moins trois fois supérieure à l'autre (largeur).

Selon une autre caractéristique avantageuse de l'invention, la cavité extrados 30 et la cavité intrados 32 du premier circuit de refroidissement A sont munies de pontets 46 s'étendant entre leurs parois latérales. Comme illustré sur les figures 2 et 4, les pontets 46 traversent les cavités extrados et intrados de part en part et créent ainsi une liaison entre leur paroi latérale en contact avec les gaz chauds et leur paroi latérale en contact avec la cavité centrale 34.

Les pontets permettent d'augmenter la turbulence de l'écoulement de l'air de refroidissement dans les cavités, ce qui a pour effet d'accroître l'efficacité du refroidissement. Ils permettent également d'augmenter la surface d'échange thermique entre l'air de refroidissement et la surface aérodynamique de l'aube.

De plus, les pontets créent des puits thermiques qui transfèrent les calories de la paroi chaude de la cavité en contact avec les gaz chauds vers la paroi plus froide de la cavité en contact avec la cavité centrale 34, ce qui entraîne une homogénéisation des températures de l'aube, une limitation des gradients thermiques dans l'aube et, par conséquent, une augmentation de la durée de vie de l'aube.

La géométrie des pontets 46 (diamètre, pas, forme, disposition, etc.) peut varier afin d'adapter les conditions thermiques de la pale aux contraintes de dimensionnement de celle-ci. Ainsi, la forme des pontets peut être quelconque, par exemple de section cylindrique, carrée ou oblong. Ces pontets peuvent en outre être disposés en quinconce ou en ligne sur toute la hauteur de la cavité.

Selon encore une autre caractéristique avantageuse de l'invention, la paroi transversale 26 formant le fond de la baignoire 28 est munie d'une pluralité de trous d'émission 48 s'ouvrant dans les cavités extrados 30, intrados 32 et centrale 34 du premier circuit de refroidissement A et débouchant dans la baignoire 28.

Les trous d'émission 48 permettent ainsi à l'air de refroidissement s'écoulant dans les cavités extrados et intrados de venir refroidir la baignoire 28 de l'aube. La baignoire est, en effet, une zone chaude soumise à des écoulements tourbillonnaires de gaz chauds qu'il est nécessaire de refroidir.

On remarquera que, dans le mode de réalisation représenté sur les figures, le premier circuit de refroidissement A comporte trois cavités extrados 30 et deux cavités intrados 32. Les cavités intrados et extrados étant alimentées en air de façon indépendante les unes des autres, il est possible de faire varier leur nombre en fonction des critères de dimensionnement de la pale. Le nombre et la taille des cavités peuvent aussi être adaptés pour permettre la mise en place des orifices de sortie 44 entre la cavité centrale 34 et la veine d'écoulement des gaz chauds.

On remarquera également que le premier circuit de refroidissement A ne comporte pas d'orifices de sortie débouchant sur la face extrados 24 de l'aube. En effet, l'injection d'air de refroidissement en aval du col de l'aube dégrade le rendement de la turbine.

Par ailleurs, l'aube 10 comporte également un deuxième circuit de refroidissement B qui est indépendant du premier circuit de refroidissement A.

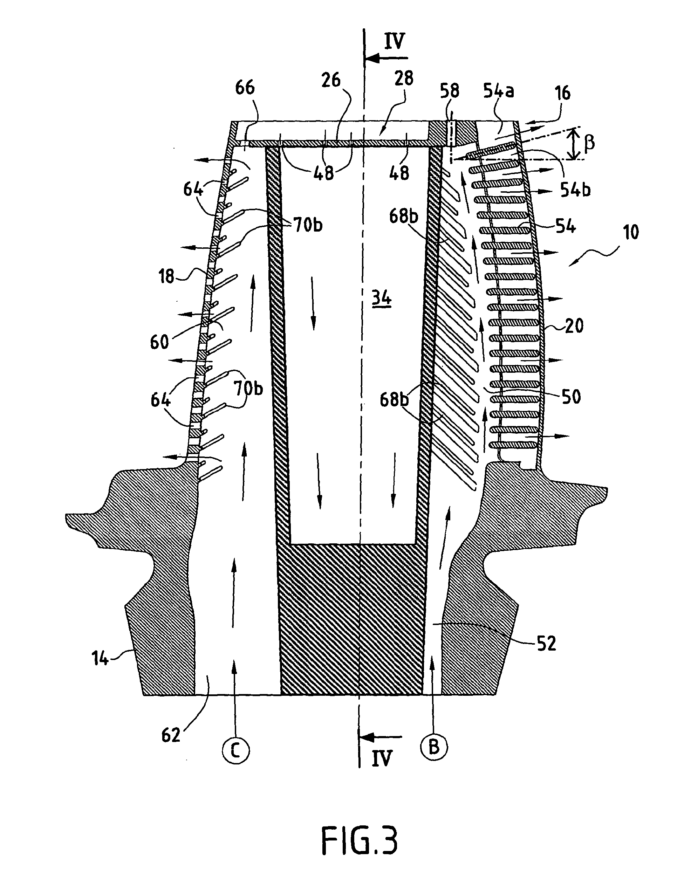

Comme illustré sur les figures 2 et 3, le deuxième circuit de refroidissement B comporte au moins une cavité bord de fuite 50 s'étendant radialement au voisinage du bord de fuite 20 de l'aube 10. Cette cavité bord de fuite 50 s'étend radialement depuis le pied d'aube 14 jusqu'à la paroi transversale 26 formant le fond de la baignoire 28 de l'aube.

Le deuxième circuit de refroidissement B comporte également, à une extrémité radiale inférieure de la cavité bord de fuite 50, une ouverture d'admission d'air 52 pour alimenter en air de refroidissement la cavité bord de fuite 50.

Enfin, une pluralité de fentes de sortie 54 s'ouvrent dans la cavité bord de fuite 50 et débouchent sur la face intrados 22 de l'aube 10 afin d'évacuer l'air de refroidissement.

En plus des fentes de sortie 54, le deuxième circuit de refroidissement B peut également comporter une pluralité d'orifices supplémentaires de sortie 56 s'ouvrant dans la cavité bord de fuite 50 et débouchant également sur la face intrados 22 de l'aube.

Ces orifices supplémentaires de sortie 56 représentés sur les figures 1 et 2 permettent d'améliorer le refroidissement du bord de fuite 20 de l'aube en formant un film d'air frais s'écoulant le long de la face intrados 22 de l'aube.

En sommet d'aube 16, le deuxième circuit de refroidissement B comporte avantageusement, au niveau de la paroi transversale 26, au moins un trou d'émission 58 s'ouvrant dans la cavité bord de fuite 50 et débouchant au niveau du sommet 16 de l'aube.

Ce ou ces trous d'émission 58 permettent ainsi à l'air de refroidissement s'écoulant dans la cavité bord de fuite 50 de venir refroidir le bord de la baignoire 28 de l'aube. Le ou les trous d'émission 58 permettent également d'évacuer les poussières et impuretés provenant de l'air de refroidissement et susceptibles de venir obturer les fentes de sortie 54 et les orifices supplémentaires de sortie 56.

Toujours selon une caractéristique avantageuse de l'invention, au moins la fente de sortie 54a la plus proche du sommet d'aube 16 présente une inclinaison β vers le sommet d'aube 16, les autres fentes de sortie 54 restant typiquement sensiblement parallèles à l'axe de la turbomachine (figure 3).

Une telle inclinaison β est définie par rapport à l'axe de la turbomachine (non représentée). A titre d'exemple, l'inclinaison peut varier entre 5° et 50°, et de préférence entre 10° et 30°, par rapport à cet axe de la turbomachine.

De préférence, cette inclinaison β vers le sommet d'aube 16 concerne les deux fentes de sortie 54a, 54b les plus proches du sommet d'aube 16 (voir figure 3), les autres fentes de sortie 54 restant sensiblement parallèles à l'axe de la turbomachine.

Une inclinaison de cette (ou ces) fente(s) de sortie 54a (54b) a pour effet d'améliorer le refroidissement du bord de fuite 20 de l'aube 10 en sommet d'aube 16. En effet, les fentes de sortie 54a, 54b les plus proches du sommet d'aube 16 étant ouvertes vers le sommet d'aube 16 (zone où la pression statique est inférieure à celle de la zone en aval du bord de fuite), le taux de détente est amélioré par rapport des fentes de sortie classique débouchant uniquement en aval du bord de fuite.

L'aube 10 de turbine comporte en outre un troisième circuit de refroidissement C qui est indépendant des premier A et deuxième B circuits de refroidissement. Ce troisième circuit C est destiné à assurer le refroidissement du bord d'attaque 18 de l'aube.

Comme illustré sur les figures 2 et 3, le troisième circuit de refroidissement C comporte au moins une cavité bord d'attaque 60 s'étendant radialement au voisinage du bord d'attaque 18 de l'aube 10. Cette cavité bord d'attaque 60 s'étend radialement depuis le pied d'aube 14 jusqu'à la paroi transversale 26 formant le fond de la baignoire 28 de l'aube (voir la figure 3).

Une ouverture d'admission d'air 62 est prévue à une extrémité radiale inférieure de la cavité bord d'attaque 60 pour alimenter en air de refroidissement la cavité bord d'attaque 60. Enfin, le troisième circuit de refroidissement C comporte des orifices de sortie 64 s'ouvrant dans la cavité bord d'attaque 60 et débouchant sur le bord d'attaque 18, sur la face intrados 22 et sur la face extrados 24 de l'aube.

De préférence, le troisième circuit de refroidissement C comporte, au niveau de la paroi transversale 26, au moins un trou d'émission 66 s'ouvrant dans la cavité bord d'attaque 60 et débouchant dans la baignoire 28 de l'aube. Ce trou d'émission 66 permet de contribuer au refroidissement de la baignoire 28 en assurant une circulation de l'air de refroidissement du sommet d'aube 16 vers la baignoire 28.

Avantageusement, le trou d'émission 66 présente une section droite supérieure à celle des orifices de sortie 64 du troisième circuit de refroidissement C de façon à permettre l'évacuation de poussières et d'impuretés provenant de l'air de refroidissement et susceptibles d'obturer ces orifices de sortie 64.

On décrira brièvement certaines caractéristiques communes aux deuxième B et troisième C circuits de refroidissement de l'aube de turbine selon l'invention.

Selon l'une de ces caractéristiques communes, la cavité bord de fuite 50 et/ou la cavité bord d'attaque 60 comporte(nt) des perturbateurs sur ses parois latérales côtés intrados et extrados de façon à accroître les transferts thermiques le long de ces parois.

Ainsi, sur les figures 2 et 3, la cavité bord de fuite 50 présente des perturbateurs 68a sur sa paroi côté intrados et des perturbateurs 68b sur sa paroi côté extrados. De même, la cavité bord d'attaque 60 comporte des perturbateurs 70a sur sa paroi côté intrados et des perturbateurs 70b sur sa paroi côté extrados.

Comme illustré sur les figures 2 et 3, les perturbateurs 68a, 68b, 70a et 70b des cavités bord de fuite 50 et bord d'attaque 60 peuvent être des nervures qui sont avantageusement inclinées de 45° environ par rapport au sens d'écoulement de l'air de refroidissement circulant dans ces cavités.

De plus, les perturbateurs 68a, 70a côté intrados peuvent présenter une inclinaison opposée à celle des perturbateurs 68b, 70b côté extrados. Dans ce cas, les perturbateurs 68a, 70a disposés sur la paroi côté intrados de la cavité bord de fuite 50 ou de la cavité bord d'attaque 60 sont de préférence décalés radialement (c'est à dire disposés en quinconce) par rapport aux perturbateurs 68b, 70b disposés sur la paroi côté extrados.

Alternativement, les perturbateurs 68a, 68b, 70a et 70b peuvent être des picots disposés en quinconce ou en ligne par exemple.

Quelle que soit leur forme et leur disposition, les perturbateurs 68a, 68b, 70a et 70b permettent d'augmenter la turbulence de l'écoulement d'air dans les cavités afin d'accroître les transferts thermiques internes.

On notera également que les perturbateurs 70a, 70b disposés dans la cavité bord d'attaque 60 du troisième circuit de refroidissement C peuvent être avec ou sans recouvrement. Le recouvrement consiste à disposer les perturbateurs de sorte que les perturbateurs côté intrados 70a de la cavité bord d'attaque 60 s'entrecroisent avec les perturbateurs côté extrados 70b de la cavité bord d'attaque.

En effet, dans la zone du bord d'attaque 18 de l'aube 10, l'essentiel du refroidissement est assuré par pompage thermique des orifices de sortie 64. De plus, la présence de perturbateurs 70a, 70b dans la cavité bord d'attaque 60 peut gêner l'usinage des orifices de sortie 64, ainsi que leur alimentation en air de refroidissement (c'est à dire dans le cas d'un orifice de sortie situé juste derrière ou traversant un perturbateur).

Selon une autre caractéristique commune aux deuxième B et troisième C circuits de refroidissement, les orifices supplémentaires de sortie 56 du deuxième circuit B et les orifices de sortie 64 du troisième circuit C peuvent avoir une forme quelconque : cylindrique, oblong, évasée, etc. Le diamètre et le pas (distance radiale entre deux orifices successifs) de ces orifices de sortie 56, 64 sont par ailleurs adaptés pour assurer un refroidissement optimum des faces latérales 22, 24 de l'aube 10.

De manière générale, les orifices supplémentaires de sortie 56 du deuxième circuit B et les orifices de sortie 64 du troisième circuit C permettent l'évacuation de l'air de refroidissement de la cavité (bord de fuite 50 et bord d'attaque 60) vers la veine d'écoulement des gaz chauds. L'air ainsi émis forme un film d'air frais qui protège la surface aérodynamique 12 de l'aube 10 contre les gaz chauds issus de la chambre de combustion.

On décrira brièvement le mode de refroidissement de l'aube qui découle de manière évidente de ce qui précède, en se référant plus particulièrement à la figure 5.

Cette figure illustre schématiquement la circulation de l'air de refroidissement qui parcourt les différents circuits A à C de l'aube 10. Ces circuits de refroidissement sont indépendants entre eux puisqu'ils comportent chacun une alimentation directe en air de refroidissement.

Le premier circuit de refroidissement central A est alimenté en air de refroidissement par la ou les cavités extrados 30 et la ou les cavités intrados 32. L'air parcourt alors ces cavités 30, 32 du pied d'aube 14 vers le sommet d'aube 16, puis assure le refroidissement par échange convectif du fond de la baignoire 28 par l'intermédiaire des trous d'émission 48 avant d'alimenter, au niveau de la paroi transversale 26, la cavité centrale 34. L'air circule ensuite dans la cavité centrale 34 dans une direction radiale opposée à celle dans laquelle il parcourt les cavités extrados 30 et intrados 32. L'air est finalement émis à l'intrados de l'aube par les orifices de sortie 44 équipant cette cavité centrale.

On notera que les cavités extrados 30 et intrados 32 étant indépendantes les unes des autres, le débit d'air de refroidissement peut varier d'une cavité à l'autre.

Le deuxième circuit de refroidissement B est alimenté en air de refroidissement par la cavité bord de fuite 50. L'air parcourt donc la cavité bord de fuite 50 du pied d'aube 14 vers le sommet d'aube 16 tout en étant émis au voisinage du bord de fuite 20, à l'intrados de l'aube, par les fentes de sortie 54, et éventuellement par les orifices supplémentaires de sortie 56.

De même, le troisième circuit de refroidissement C est alimenté en air de refroidissement par la cavité bord d'attaque 60. L'air parcourt donc la cavité bord d'attaque 60 du pied d'aube 14 vers le sommet d'aube 16 tout en étant émis au voisinage du bord d'attaque 18, à l'intrados, à l'extrados et au bord d'attaque de l'aube par les orifices de sortie 64.

Par rapport aux circuits classiques de refroidissement d'aubes de turbine, la présente invention permet ainsi aux aubes de fonctionner à des températures plus élevées en entrée de turbine.

A iso condition de fonctionnement de la turbine, l'invention permet d'augmenter la durée de vie de l'aube en abaissant la température moyenne de celle-ci. De même, à iso durée de vie, elle permet de diminuer le débit nécessaire au refroidissement de l'aube et d'augmenter ainsi le rendement de la turbine.

La présence de pontets dans les cavités extrados et intrados du circuit de refroidissement central permet d'assurer une meilleure résistance mécanique de l'aube en assurant une liaison entre la paroi en contact avec les gaz chauds et la paroi en contact avec la cavité centrale.

Le circuit de refroidissement central permet en outre de disposer, dans la partie centrale de l'aube, d'une cavité aménagée sous la baignoire de l'aube. Cette caractéristique permet de positionner les trous d'émission dans les zones préférentielles à refroidir sans aucune contrainte, ce qui simplifie le refroidissement du fond de la baignoire. Elle présente également l'avantage de simplifier l'usinage des trous d'émission en autorisant une plus grande tolérance dans le positionnement des trous.

Dans la partie centrale de l'aube, la présence des trous d'émission permet le refroidissement par pompage thermique dans la paroi transversale formant le fond de la baignoire de l'aube. Ces trous d'émission créent en outre des films d'air qui protègent les faces latérales de l'aube contre les gaz chauds.

Au niveau du bord de fuite de l'aube, la présence d'une ou de deux fentes de sortie inclinées vers le sommet d'aube permet de refroidir le bord de fuite en sommet d'aube. Elle permet également d'améliorer le refroidissement de la cavité bord de fuite dans sa partie supérieure.

## Revendications

1. Aube (10) de turbine à gaz d'une turbomachine, comportant une surface aérodynamique (12) qui s'étend radialement entre un pied d'aube (14) et un sommet d'aube (16), qui présente un bord d'attaque (18) et un bord de fuite (20) reliés par une face latérale intrados (22) et une face latérale extrados (24) et qui est fermée au niveau du sommet d'aube par une paroi transversale (26), ladite surface aérodynamique (12) s'étendant radialement au-delà de ladite paroi transversale (26) de façon à former une baignoire (28),
**caractérisée en ce qu'**elle comporte en outre, dans sa partie centrale, un premier circuit de refroidissement central (A) comprenant :
au moins une cavité extrados (30) s'étendant radialement du côté extrados (24) de l'aube ;
au moins une cavité intrados (32) s'étendant radialement du côté intrados (22) de l'aube ;
au moins une cavité centrale (34) s'étendant radialement dans la partie centrale de l'aube entre la cavité extrados (30) et la cavité intrados (32) ;
une première ouverture d'admission d'air (36) à une extrémité radiale inférieure de la cavité extrados (30) pour alimenter en air de refroidissement ladite cavité extrados (30) ;
une seconde ouverture d'admission d'air (38) à une extrémité radiale inférieure de la cavité intrados (32) pour alimenter en air de refroidissement ladite cavité intrados (32) ;
au moins un premier passage (40) faisant communiquer une extrémité radiale supérieure de la cavité extrados (30) à une extrémité radiale supérieure de la cavité centrale (34) ;
au moins un second passage (42) faisant communiquer une extrémité radiale supérieure de la cavité intrados (32) à l'extrémité radiale supérieure de la cavité centrale (34) ; et
des orifices de sortie (44) s'ouvrant dans la cavité centrale (34) et débouchant sur la face intrados (22) de l'aube.

2. Aube selon la revendication 1, **caractérisée en ce qu'**elle comporte en outre un deuxième circuit de refroidissement (B), indépendant du premier circuit de refroidissement (A), ledit deuxième circuit de refroidissement (B) comportant :
au moins une cavité bord de fuite (50) s'étendant radialement au voisinage du bord de fuite (20) de l'aube ;
une ouverture d'admission d'air (52) à une extrémité radiale inférieure de la cavité bord de fuite (50) pour alimenter en air de refroidissement ladite cavité bord de fuite (50) ; et
des fentes de sortie (54) s'ouvrant dans la cavité bord de fuite (50) et débouchant sur la face intrados (22) de l'aube.

3. Aube selon la revendication 2, **caractérisée en ce que** la paroi transversale (26) de l'aube comporte au moins un trou d'émission (58) s'ouvrant dans la cavité bord de fuite (50) du deuxième circuit de refroidissement (B) et débouchant au niveau du sommet d'aube (16).

4. Aube selon l'une des revendications 2 et 3, **caractérisée en ce qu'**au moins la fente de sortie (54a) la plus proche du sommet d'aube (16) présente une inclinaison (β) vers le sommet d'aube (16) par rapport à un axe longitudinal de la turbomachine.

5. Aube selon la revendication 4, **caractérisée en ce que** ladite inclinaison (β) vers le sommet d'aube (16) est comprise entre 10° et 30° par rapport audit axe longitudinal de la turbomachine.

6. Aube selon l'une quelconque des revendications 2 à 5, **caractérisée en ce que** la cavité bord de fuite (50) du deuxième circuit de refroidissement (B) comporte des perturbateurs (68a, 68b) sur ses parois côtés intrados et extrados de façon à accroître les transferts thermiques le long de ces parois.

7. Aube selon l'une quelconque des revendications 2 à 6, **caractérisée en ce qu'**elle comporte en outre un troisième circuit de refroidissement (C), indépendant des premier (A) et deuxième (B) circuits de refroidissement, ledit troisième circuit de refroidissement (C) comportant :
au moins une cavité bord d'attaque (60) s'étendant radialement au voisinage du bord d'attaque (18) de l'aube ;
une ouverture d'admission d'air (62) à une extrémité radiale inférieure de la cavité bord d'attaque (60) pour alimenter en air de refroidissement ladite cavité bord d'attaque (60) ; et
des orifices de sortie (64) s'ouvrant dans la cavité bord d'attaque (60) et débouchant sur le bord d'attaque (18), sur la face intrados (22) et sur la face extrados (24) de l'aube.

8. Aube selon la revendication 7, **caractérisée en ce que** la paroi transversale (26) de l'aube comporte au moins un trou d'émission (66) s'ouvrant dans la cavité bord d'attaque (60) du troisième circuit de refroidissement (C) et débouchant dans la baignoire (28) de façon à refroidir celle-ci.

9. Aube selon la revendication 8, **caractérisée en ce que** ledit trou d'émission (66) présente une section droite supérieure à celle des orifices de sortie (64) du troisième circuit de refroidissement (C) de façon à permettre l'évacuation d'impuretés provenant de l'air de refroidissement et pouvant obturer lesdits orifices de sortie (64).

10. Aube selon l'une des revendications 7 à 9, **caractérisée en ce que** la cavité bord d'attaque (60) comporte des perturbateurs (70a, 70b) sur ses parois côtés intrados et extrados de façon à accroître les transferts thermiques le long de ces parois.

11. Aube selon l'une quelconque des revendications 1 à 10, **caractérisée en ce que** la paroi transversale (26) de l'aube comporte une pluralité de trous d'émission (48) s'ouvrant dans les cavités intrados (32), extrados (30) et centrale (34) du premier circuit de refroidissement (A) et débouchant dans la baignoire (28) de façon à refroidir celle-ci.

12. Aube selon l'une quelconque des revendications 1 à 11, **caractérisée en ce que** la cavité intrados (32) du premier circuit de refroidissement (A) comporte des pontets (46) s'étendant entre ses parois latérales afin d'accroître les transferts thermiques internes.

13. Aube selon l'une quelconque des revendications 1 à 12, **caractérisée en ce que** la cavité extrados (30) du premier circuit de refroidissement (A) comporte des pontets (46) s'étendant entre ses parois latérales afin d'accroître les transferts thermiques internes.

14. Aube selon l'une quelconque des revendications 1 à 13, **caractérisée en ce que** la cavité intrados (32) et la cavité extrados (30) du premier circuit de refroidissement (A) sont à rapport de forme élevé de manière à accroître les transferts thermiques internes.
